# EUROPEAN PATENT APPLICATION

(11) **EP 3 177 009 A1**
(43) Date of publication of application: **07.06.2017**
(21) Application number: 15197415.1
(22) Date of filing: 02.12.2015
(51) Int. Cl.: H04N 7/18, G08B 13/196, H04N 5/225, H04N 5/247

(54) **CAMERA SYSTEM WITH A FULL VIEW MONITORING FUNCTION**

(71) Applicant: GeoVision Inc., Taipei 114 (TW)
(72) Inventor: Wu, Chih-Ming, 235 New Taipei City (TW); Hsu, Chun-Kai, 220 New Taipei City (TW); Lee, Chun-Tao, 235 New Taipei City (TW)
(74) Representative: Straus, Alexander

(57) **Abstract**

A camera system (10) with a full view monitoring function includes a base (12), a first camera apparatus (14), at least one second camera apparatus (16) and a controller (18). The first camera apparatus (14) is fixed on the base (12) and invariably faces toward a first direction (D1). The first camera apparatus (14) is adapted to capture a panorama image (I1). The second camera apparatus (16) is movably disposed on the base (12) and adjustably faces toward a detecting direction different from the first direction (D1). The second camera apparatus (16) is adapted to encircle around the first camera apparatus (14). The controller (18) is electrically connected to the first camera apparatus (14) and the second camera apparatus (16). The controller (18) is adapted to analyze the panorama image (I1) to filter out a triggering zone (Z1), to encircle the second camera apparatus (16) toward a detecting direction corresponding to the triggering zone (Z1), and to drive the second camera apparatus (16) to capture a detecting image (I2) overlapping the triggering zone (Z1).

## Description

### Field of the Invention

The present invention relates to a camera system with a full view monitoring function according to the pre-characterizing clauses of claim 1.

### Background of the Invention

A monitoring system is extensively applied to the public place, such as the train station, the supermarket, the street and so on. A fisheye camera or a PTZ camera is applied to the conventional monitoring system. Capturing orientation of the fisheye camera is unchangeable, and the fisheye camera captures a panorama image to view a large area within an environment. However, the edge of the panorama image may be indistinct because of optical distortion phenomenon, and cannot clearly provide detailed characteristic for image identification. The PTZ camera represents the camera lens can be panned, tilted and zoomed in/out to capture the small-size image. The PTZ camera cannot capture the panorama image, so that application of the PTZ camera is unable to monitor the wide public place.

### Summary of the Invention

This in mind, the present invention aims at providing a camera system that has a full view monitoring function.

This is achieved by a camera system with a full view monitoring function according to claim 1. The dependent claims pertain to corresponding further developments and improvements.

As will be seen more clearly from the detailed description following below, the claimed camera system includes a protective mask, a base, a first camera apparatus and at least one second camera apparatus. The base is connected to the protective mask to form an interior space therebetween, and the base includes a rotary portion. The first camera apparatus is fixed in the interior space and invariably faces toward a first direction. The first camera apparatus is adapted to capture a panorama image. The second camera apparatus is movably disposed on the base and in the interior space, and adjustably faces toward a detecting direction different from the first direction. The second camera apparatus is being disposed on the rotary portion, and the rotary portion is adapted to rotate about an axis parallel to the first direction.

### Brief Description of the Drawings

In the following, the invention is further illustrated by way of example, taking reference to the accompanying drawings. Thereof:
FIG. 1 is a functional block diagram of a camera system according to an embodiment of the present invention,
FIG.2 is a diagram of a display panel according to the embodiment of the present invention,
FIG.3 is a structural diagram of the camera system according to the embodiment of the present invention,
FIG.4 and FIG.5 respectively are diagrams of the camera system in different operational modes according to the embodiment of the present invention, and
FIG.6 and FIG.7 respectively are diagrams of the camera system according to different embodiments of the present invention.

### Detailed Description

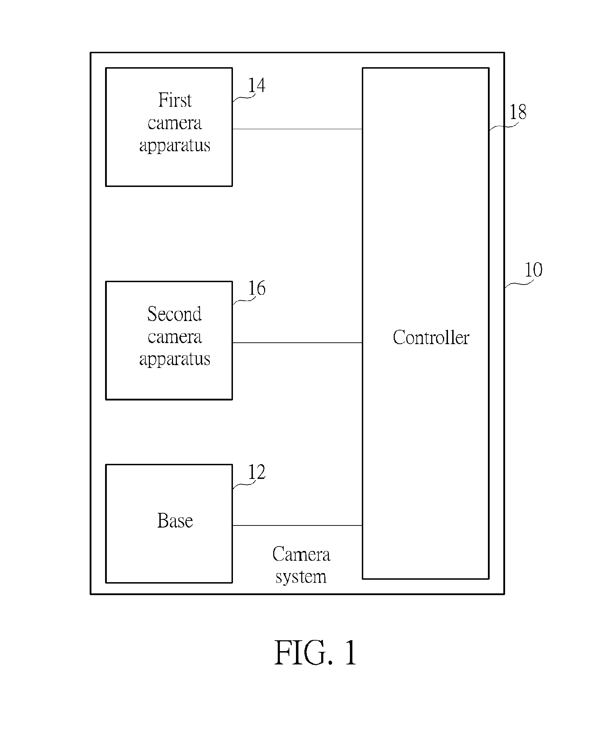

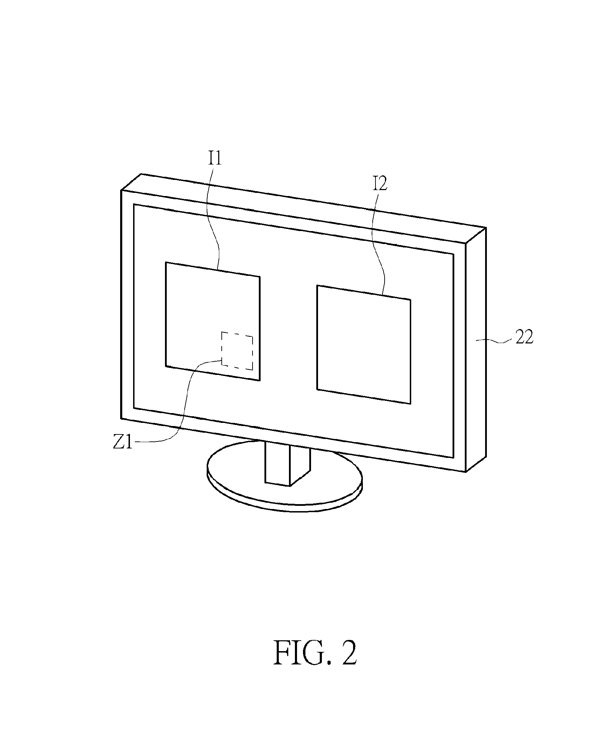

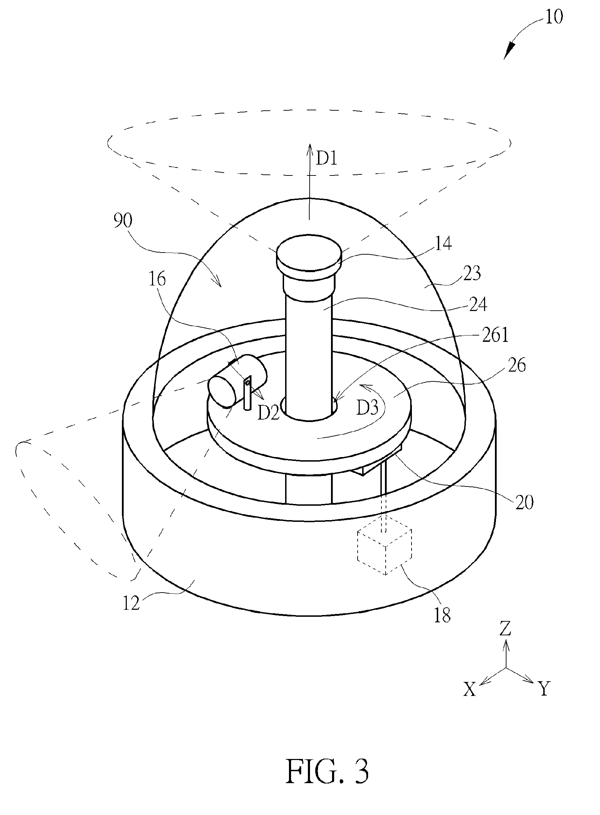

Please refer to FIG.1 to FIG.3. FIG.1 is a functional block diagram of a camera system 10 according to an embodiment of the present invention. FIG.2 is a diagram of a display panel 22 applied to the camera system 10 according to the embodiment of the present invention. FIG.3 is a structural diagram of the camera system 10 according to the embodiment of the present invention. The camera system 10 includes a base 12, a first camera apparatus 14, at least one second camera apparatus 16, a controller 18, a rotating mechanism 20 and the display panel 22. The first camera apparatus 14 is fixed on the base 12 and invariably faces toward a first direction D1. The first camera apparatus 14 can be a fisheye camera and is adapted to capture a panorama image I1. The second camera apparatus 16 is movably disposed on the base 12 by the rotating mechanism 20 and adjustably faces toward a detecting direction which is different from the first direction D1. For example, the first direction D1 substantially orients to Z-axis, and the detecting direction can orient to X-axis and/or Y-axis, switchably move over X-Y plane, X-Z plane and/or Y-Z plane.

Additionally, the first camera apparatus 14 and the second camera apparatus 16 may be covered by a protective mask 23. Between the protective mask 23 and the base 12 is an interior space 90 that accommodates the first camera apparatus 14 and the second camera apparatus 16. The protective mask 23 can be an arc structure for waterproof and dustproof protection and is made of transparent material. The rotating mechanism 20 may be a slide rail mechanism or a gear mechanism. Any mechanical mechanism capable of stably rotating the second camera apparatus 16 conforms to scope of the rotating mechanism 20 of the present invention. Further, the controller 18 is electrically connected to the first camera apparatus 14, the second camera apparatus 16, the rotating mechanism 20 and the display panel 22.

In an operational process of the camera system 10, the controller 18 firstably drives the first camera apparatus 14 to capture the panorama image I1. The panorama image I1 is analyzed to filter out a triggering zone Z1, and the triggering zone Z1 may represent a questionable zone within the panorama image I1. The controller 18 further compares the triggering zone Z1 with a threshold, which may be a predetermined parameter or an auto-updated parameter, to determine whether the second camera apparatus 16 is driven to capture a detecting image I2 according to a foresaid comparison. For example, the second camera apparatus 16 does not move toward the triggering zone Z 1 or the second camera apparatus 16 scans its whole view field since the triggering zone Z1 is lower than the threshold. When the triggering zone Z 1 is greater than the threshold, the second camera apparatus 16 is actuated to focus on the detecting direction (which corresponds to the triggering zone Z1) and captures the detecting image I2 without optical distortion phenomenon. Because detailed characteristics within the triggering zone Z1 may be difficult to be identified by the panorama image I1, the controller 18 drives the display panel 22 to simultaneously display the panorama image I1 and the detecting image I2, so that the user can distinctly confirm the foresaid detailed characteristics by the detecting image 12.

Exhibition of the panorama image I1 and the detecting image I2 is not limited to the above-mentioned embodiment, and depends on actual demand. The detecting image I2 may partly overlaps the panorama image I1, or the detecting image I2 may be magnified by an external command, such as the command from a keyboard or a mouse, to be larger than the panorama image I1 on the display panel 22.In addition, the controller 18 can drive the second camera apparatus 16 to scan the triggering zone Z1 in reciprocation since the triggering zone Z 1 is greater than the view field of the second camera apparatus 16, and a plurality of detecting images I2 is captured and can be displayed on the display panel 22 in sequence for convenient identification. The view field of the first camera apparatus 14 is wider than the view field of the second camera apparatus 16. Cone forms shown in FIG.3 respectively represent the view fields of the first camera apparatus 14 and the second camera apparatus 16.

The base 12 includes a central portion 24 and a rotary portion 26. The central portion 24 can be an upright structure, and the rotary portion 26 can be an annular holder or an arc holder that moves along a track encircling the upright structure. The rotary portion 26 rotates about an axis, which is the same as or parallel to the first direction that the first camera apparatus 14 faces toward. The first camera apparatus 14 is disposed on the central portion 24 without rotary/shift movement. The second camera apparatus 16 is disposed on the rotary portion 26, and can encircle around the first camera apparatus 14 by revolution of rotary portion 26 round the central portion 24. Generally, the rotary portion 26 preferably can be a tray with a central hole 261, the central portion 24 passes through the central hole 261 and is encircled by the rotary portion 26. The controller 18 can drive the rotating mechanism 20 to rotate the second camera apparatus 16 relative to the base 12 at a second direction D2 substantially perpendicular to the first direction D1, and further to shift the second camera apparatus 16 at a third direction D3 encircling round the first direction D1, which means the detecting direction can switchably orient to X-axis, Y-axis, X-Y plane, X-Z plane and/or Y-Z plane.

As shown in FIG.3, the third direction D3 can be a clockwise direction or a counterclockwise direction relative to the first direction D1. The view field of the second camera apparatus 16 can switchably cover the X-Z plane and/or the Y-Z plane simultaneously parallel to the first direction D1 and the second direction D2 since the second camera apparatus 16 rotates relative to the base 12 at the second direction D2. The view field of the second camera apparatus 16 further can switchably cover the X-Y plane since the second camera apparatus 16 is shifted at the third direction D3. The second camera apparatus 16 is driven to face toward the detecting direction which is the same as or different from the first direction D1, and is adapted to capture the detecting image I2 that overlaps the triggering zone within the panorama image I1 or does not coincide with the panorama image I1. Therefore, the camera system 10 provides a full view monitoring function.

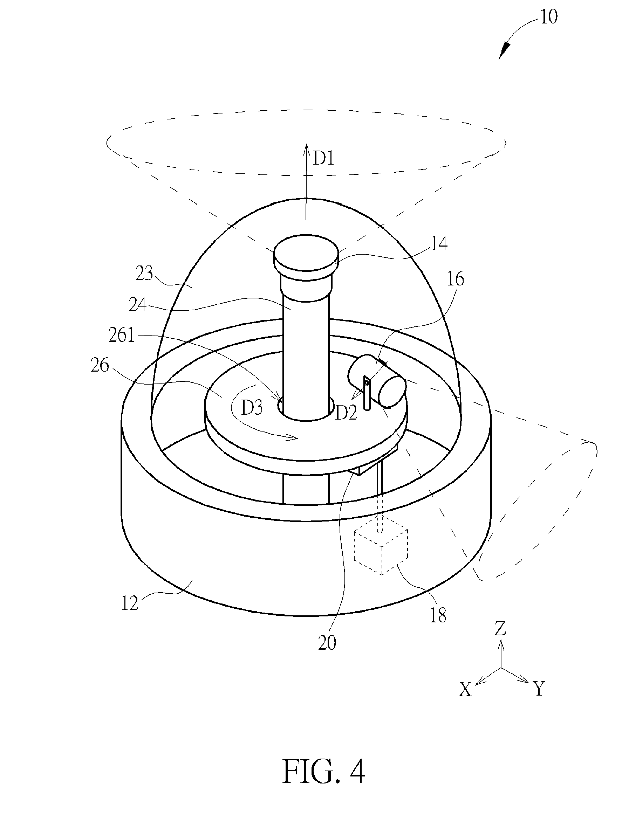

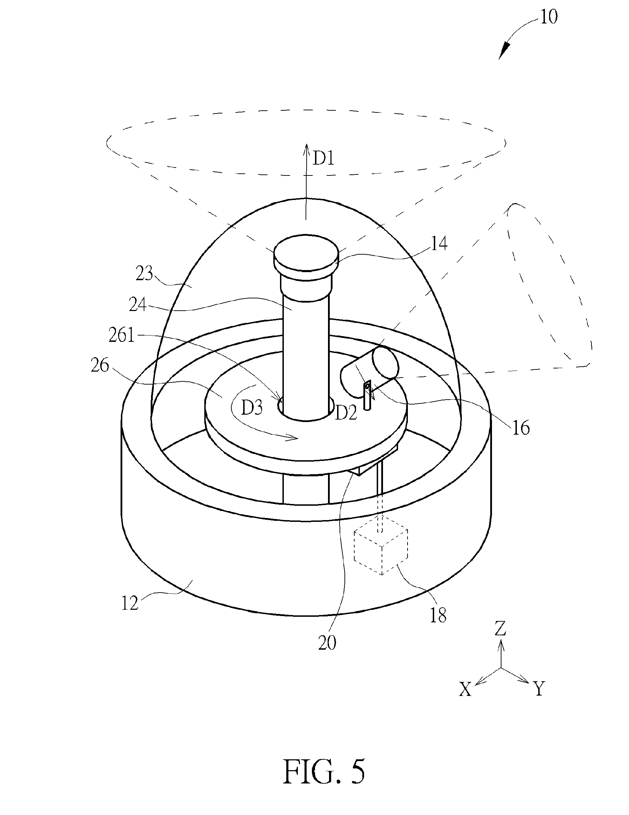

Please refer to FIG.3 to FIG.5. FIG.4 and FIG.5 respectively are diagrams of the camera system 10 in different operational modes according to the embodiment of the present invention. The first camera apparatus 14 is fixed toward the first direction D1 to capture the panorama image I1. The controller 18 drives the second camera apparatus 16 to search the specific detecting direction via clockwise encirclement or counterclockwise encirclement of the rotary portion 26 and/or via rotation of the second camera apparatus 16 according to analysis of the triggering zone, which means the second camera apparatus 16 can be freely encircled along the third direction D3 from a position shown in FIG.3 to a position shown in FIG.4, and/or freely rotated along the second direction D2 from the position shown in FIG.4 to a position shown in FIG.5. Thus, the second camera apparatus 16 can capture the detecting image I2 overlapping the triggering zone Z 1 within the panorama image I1, the detecting image I2 partly overlapping an edge of the panorama image I1 to enhance the detailed characteristic located on the foresaid edge, and/or the detecting image I2 out of the view field of the first camera apparatus 14. The first camera apparatus 14 does not rotate since the second camera apparatus 16 encircles around the first camera apparatus 14 to switch toward the detecting direction.

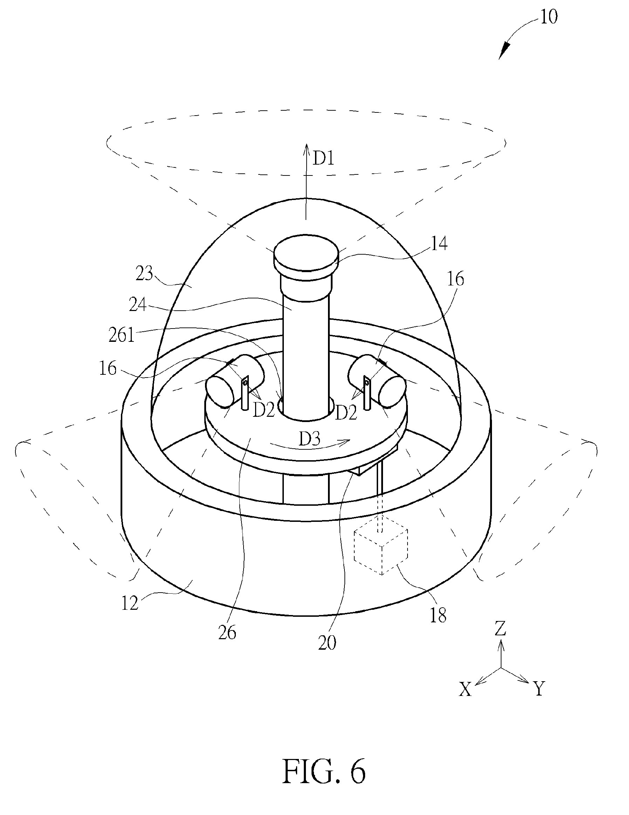

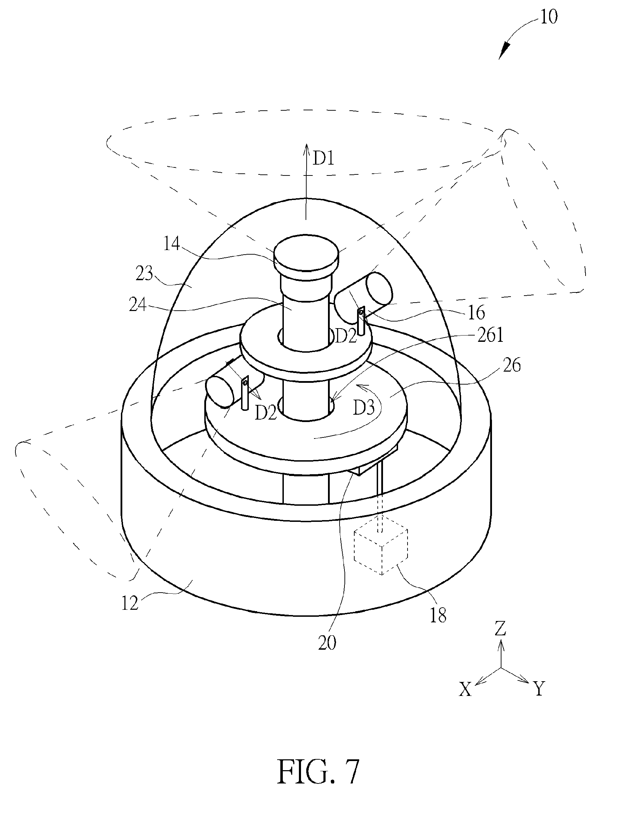

Please refer to FIG.6 and FIG.7. FIG.6 and FIG.7 respectively are diagrams of the camera system 10 according to different embodiments of the present invention. As shown in FIG.6, the camera system 10 can include a plurality of second camera apparatuses 16. The first camera apparatus 14 is invariably fixed on the central portion 24, and the plurality of second camera apparatuses 16 is respectively disposed on different position of the rotary portion 26 in symmetry or in asymmetry. The rotary portion 26 revolves round the central portion 24, the plurality of second camera apparatuses 16 adjustably face toward corresponding detecting directions, and the camera system 10 can simultaneously magnify plenty of triggering zones Z1 within the panorama image I1. As shown in FIG.7, the base 12 includes the central portion 24 and a plurality of rotary portions 26. The first camera apparatus 14 is invariably fixed on the central portion 24, and the plurality of second camera apparatuses 16 is respectively disposed on the corresponding rotary portion 26. Because each of the rotary portions 26 is rotatably disposed on the central portion 24 and independent of another rotary portion 26, each of the rotary portions 26 can singly revolve round the central portion 24, and the plurality of second camera apparatuses 16 can adjustably face toward different detecting directions to capture the detecting images I2 that respectively coincide with different triggering zones Z1.

The present invention includes the first camera apparatus and at least one second camera apparatus. The first camera apparatus is immovable and utilized to capture the wide-view panorama image. A part of the panorama image may be indistinct due to the optical distortion, so that the second camera apparatus without distortion effect is applied to capture the narrow-view detecting image for compensation of the wide-view panorama image. The second camera apparatus can be rotated relative to the base at the second direction and further can be shifted at the third direction by revolution of the rotary portion round the central portion to dynamically cover the whole range surrounding the camera system. Comparing to the prior art, the present invention has advantages of automatically dynamic compensation, full-view observation and local magnification, can effectively identify any subtle difference within environment where the camera system is located.

## Claims

1. A camera system (10) with a full view monitoring function, the camera system (10) comprising:
a protective mask (23);
**characterized in that** the camera system (10) further comprises:
a base (12) connected to the protective mask (23) to form an interior space (90) therebetween, wherein the base (12) comprises a rotary portion (26);
a first camera apparatus (14) fixed in the interior space (90) and invariably facing toward a first direction (D1), the first camera apparatus (14) being adapted to capture a panorama image (I1); and
at least one second camera apparatus (16) movably disposed on the base (12) and in the interior space (90) and adjustably facing toward a detecting direction different from the first direction (D1), the second camera apparatus (16) being disposed on the rotary portion (26) and the rotary portion (26) being adapted to rotate about an axis parallel to the first direction (D1).

2. The camera system (10) of claim 1 **characterized by**:
a rotating mechanism (20) electrically connected to the second camera apparatus (16), capable of rotating the second camera apparatus (16) relative to the base (12) at a second direction (D2) substantially perpendicular to the first direction (D1).

3. The camera system (10) of claim 2 **characterized in that** a view field of the second camera apparatus (16) switchably covers a plane simultaneously parallel to the first direction (D1) and the second direction (D2).

4. The camera system (10) of claim 1 **characterized in that** the base (12) further comprises a central portion (24), the first camera apparatus (14) is disposed on the central portion (24), the second camera apparatus (16) is disposed on the rotary portion (26), and the rotary portion (26) revolves round the central portion (24).

5. The camera system (10) of claim 4 **characterized in that** the central portion (24) is an upright structure, the rotary portion (26) is an annular holder or an arc holder encircling the upright structure.

6. The camera system (10) of claim 4 **characterized in that** the rotary portion (26) is a tray with a central hole (261), the central portion (24) passes through the central hole (261) and is encircled by the rotary portion (26).

7. The camera system (10) of claim 1 **characterized by**:
a controller (18) electrically connected to the first camera apparatus (14) and the second camera apparatus (16), the controller (18) being adapted to analyze the panorama image (I1) to filter out a triggering zone (Z1), to move the second camera apparatus (16) toward the detecting direction corresponding to the triggering zone (Z1), and to drive the second camera apparatus (16) to capture a detecting image (12) overlapping the triggering zone (Z1).

8. The camera system (10) of claim 7 **characterized in that** the controller (18) compares the triggering zone (Z1) with a threshold, and determines whether the second camera apparatus (16) is driven to capture the detecting image (12) according to a comparison.

9. The camera system (10) of claim 7 **characterized in that** the controller (18) drives the second camera apparatus (16) to scan the triggering zone (Z1) in reciprocation since the triggering zone (Z1) is greater than a view field of the second camera apparatus (16).

10. The camera system (10) of claim 7 **characterized by**:
a display panel (22) electrically connected to the controller (18), for simultaneously displaying the panorama image (I1) and the detecting image (12).

11. The camera system (10) of claim 7 **characterized by**:
a plurality of second camera apparatuses (16) movably disposed on the base (12) and adjustably facing toward corresponding detecting directions.

12. The camera system (10) of claim 11 **characterized in that** the base (12) comprises a central portion (24) and a rotary portion (26), the first camera apparatus (14) is disposed on the central portion (24), the plurality of second camera apparatuses (16) is disposed on different position of the rotary portion (26) in symmetry or in asymmetry, and the rotary portion (26) revolves round the central portion (24).

13. The camera system (10) of claim 11 **characterized in that** the base (12) comprises a central portion (24) and a plurality of rotary portions (26), the first camera apparatus (14) is disposed on the central portion (24), the plurality of second camera apparatuses (16) is respectively disposed on the corresponding rotary portion (26), and the plurality of rotary portions (26) respectively revolves round the central portion (24).

14. The camera system (10) of claim 13 **characterized in that** each of the rotary portions (26) is rotatably disposed on the central portion (24) and independent of another rotary portion (26).
